# EUROPEAN PATENT APPLICATION

(11) **EP 1 653 659 A1**
(43) Date of publication of application: **03.05.2006**
(21) Application number: 04736062.3
(22) Date of filing: 04.06.2004
(51) Int. Cl.: H04L 12/18, H04L 12/56

(54) **METHOD OF ESTABLISHING LINKS BETWEEN STATIONS WHICH ARE CONNECTED TO A TELECOMMUNICATION NETWORK**

(30) Priority: 04.07.2003 ES 200301575
(71) Applicant: Diseno de Sistemas en Silicio S.A., 46980 Paterna (Valencia) (ES)
(72) Inventor: BLASCO CLARET, Jorge, Vicente, E-46020 Valencia (ES); RIVEIRO INS A, Juan Carlos, 46019 Valencia (ES); LLUNA GIL, Eduardo, E-46182 La Canada - Paterna (ES); TORRES CANT N, Luis, Manuel, E-46009 Valencia (ES); RAMIRO MANZANO, ngel, E-46360 Bunol (ES)
(74) Representative: Ungria Lopez, Javier
(86) International application number: PCT/ES2004/000258
(87) International publication number: WO 2005/004392

(57) **Abstract**

It is characterized by the assignment of a local transmission identifier to each link and a decoding of the information based on the local identifier of the assigned link and on the unequivocal identifier sent by the transmitter in its transmission period.

It permits multiple links to be established between stations of a telecommunications network, in a way that is unicast (towards a single recipient) or multicast (towards multiple recipients) independently of the type of network or system used in the communication.

It is applicable to telecommunication systems which apply an addressing system for the connection of stations and displays the advantages of minimizing the data overload due to the headers, facilitating the establishment of connections between two or more stations and making the addressing of the packets within the same network more flexible.

## Description

### OBJECT OF THE INVENTION

As stated in the title of this specification, the present invention refers to a procedure for establishment of links between stations connected to a telecommunication network, which permits the data overload of the header of the packets to be reduced, multiple destinations to be selected and different configuration parameters of the communication to be used.

The procedure of the invention is applicable to communications networks functioning according to the OST (Open System Interconnection) of the ISO (International Standards Organization) or needing an addressing system for connection between stations.

### BACKGROUND TO THE INVENTION

In the majority of telecommunication systems an addressing process needs to be carried out on the packets that are sent so that they are received by the destination receiver station or stations to which the packets are addressed, and likewise the receiver station has to be capable of identifying the sender station of the packets. Each station includes a transmitter and a receiver for carrying out the communication, in such a way that a station can be a transmitter station at certain moments and a receiver station at others.

This is particularly important in the case of telecommunication networks in which all the stations can physically receive any packet generated within the network. A habitual procedure in the state of the art is that used in standard IEEE 802.3/802.2 Ethernet which consists of marking the packets with the MAC (Medium Access Control) address of the recipient and of the sender. The problems presented by this form of addressing are mainly that the overload of the header is considerable, which is not very flexible when it comes to transmitting to multiple recipients (multicast) or to all users (broadcast) and which hinders the possibility of having different communication parameters depending on the destination station or stations.

Our invention solves the drawbacks stated above, reducing the overload of the header, facilitating the selection of the destination station or stations and permitting the communication with different stations to have different communication parameters if so required.

In the present document the term port is used to refer to an identifier number of a link. Two type of ports are used, transmission and reception.

The term broadcast message or transmission indicates that the transmission is addressed to all stations capable of receiving that message or transmission, and the term multicast message or transmission indicates that it is addressed to a defined group excluding those stations which, in spite of being capable of receiving the message or transmission, do not belong to the group.

Also, when it is stated that a communication link between two stations A and B is two-way, this refers to the fact that it is made up of two links, one from station A to station B and the other from station B to station A.

Moreover, the term link refers to a data transmission session between a transmitter station and one or more receivers. There can be more than one link between two stations, but all the connections are one-way.

### DESCRIPTION OF THE INVENTION

In order to achieve the objectives and avoid the drawbacks stated in the above sections, the invention consists of a procedure for establishment of links between stations connected to a telecommunication network, which use a single telecommunication system and include at least one transmitter and one receiver, in such a way that a station can transmit to other stations, in which case it will be a transmitter station; and receive information from other stations connected to the telecommunication network, in which case it will be a receiver station. The procedure is primarily characterized in that links are established between stations of the network for which each transmitter station assigns a local transmission identifier to each link with the receiver stations to which it can transmit information, and it communicates that assignment to those receiver stations. Moreover, each transmitter station establishes one or more links with each receiver station. To achieve this, each transmitter assigns one or more identifiers to each receiver, where the communications which use those identifiers have different coding parameters for the channel.

The procedure also provides that, during its transmission period, each transmitter sends an unequivocal identifier of the identity of its station within the network. Also, the transmitter station sends information packets to which is associated the identifier corresponding to the link together with the destination and the desired channel coding characteristics. In this way, a receiver is capable of decoding the information sent by a link when the identifier of that information packet coincides with one of the identifiers associated with a receiver station by the transmitter whose unequivocal identification was sent in the transmission period.

Thanks to this procedure, the links manage to be established in a way that is efficient, configurable and with a minimum overload in the transmissions.

Another characteristic of the procedure consists of the fact that, in order to carry out transmissions to multiple destination receiver stations to which the information is addressed (by multicast or broadcast) a transmission identifier is assigned to the link between the transmitter of a station and the set of receivers of the destination receiver stations, in which a channel coding is used that is known to all destination receiver stations. In this way, all the destination receiver stations are capable of retrieving the transmitted information on the basis of the transmission identifier and of the unequivocal identifier of the transmitter station of the information.

In the procedure of the invention, each link has a different channel coding which includes at least the modulation type, bits per carrier and error protection; and is defined by the unequivocal identifier of the transmitter station and the identifier of the link, which communicates to the destination receiver station or destination receivers of that link.

Finally, the procedure is also characterized in that a two-way link is carried out between two stations A and B by means of the creation of two links, one from station A to station B and the other from station B to station A.

Thanks to this procedure, a lower overload by the header data is achieved, the destination selection is facilitated in the event of multiple recipients, and the possibility of using different parameters in the configuration of the communication is likewise facilitated.

Below, in order to facilitate a better understanding of this specification and forming an integral part thereof, some figures are included in which the object of the invention has been represented in a manner that is illustrative rather than limiting.

### BRIEF DESCRIPTION OF THE FIGURES

**Figure 1.-** Schematically represents the initial status in which each station only knows the MAC addresses of the stations with which it can communicate and it assigns to each of them a transmission port (numerical identifier of a link) and a reception port.
**Figure 2.-** Schematically represents the sending of a notification message with the transmission port assigned to a link.
**Figure 3.-** Schematically represents the status in which the notification message has been received and the link has been created.
**Figure 4.-** Schematically represents the sending of a notification message from the transmission port assigned to the link.
**Figure 5.-** Schematically represents the final status in which there exists a two-way link between the two stations.
**Figure 6.-** Schematically represents the sending of data packets via the established two-way link.
**Figure 7.-** Schematically represents the initial status in the case prior to the establishment of a link to multiple destination receiver stations.
**Figure 8.-** Schematically represents the sending of the notification message for a link to multiple destination receiver stations.
**Figure 9.-** Schematically represents the final status in which the link to multiple recipients has been created.
**Figure 10.-** Schematically represents the sending of data packets via a link to multiple recipients.

### DESCRIPTION OF AN EXAMPLE OF EMBODIMENT OF THE INVENTION

Given below is a description of an example of the invention, making reference to the numbering adopted in the figures.

In this example of embodiment, the establishment of links is specified step by step, from two-way links to multipoint links. The invention provides for the assignment of an unequivocal identifier of the transmitter station, which in this example consists of the station's Ethernet MAC address. In order to establish a two-way link between two stations A and B, one starts from the status in which the stations mutually know their MAC addresses. In this example of embodiment, the stations locally assign a transmission port and another port for reception for the link. It is possible to assign more than one port for multiple links, in which case the process specified below is followed several times.

In the figures included in this specification, each circumference represents a station of the communications system. The label in the upper line, within each circumference, is an unequivocal identifier of that station for carrying out the transmission. The second line contains four symbols separated by commas. The first is the unequivocal identifier of the receiver station, the second is the transmission port assigned to the receiver station, the third is the reception port and the fourth is the transmission port, which will be assigned by the receiver for this link. When any of these values is represented as X, it indicates that the said value is not yet defined in that point of the communication.

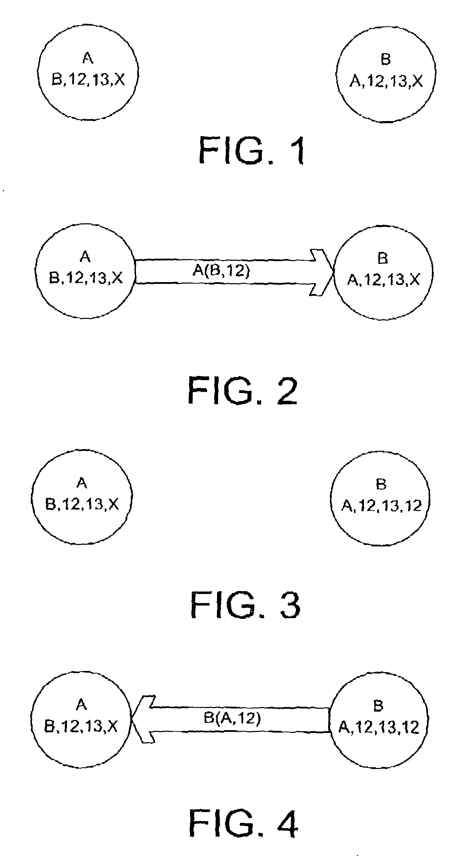

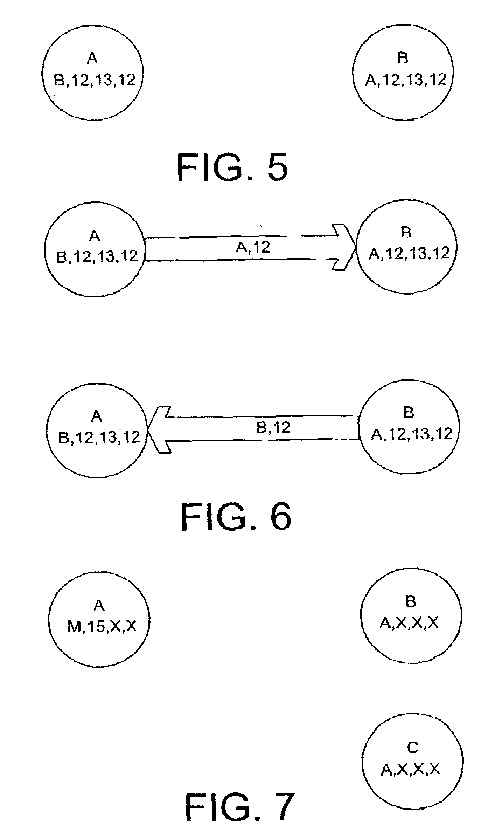

Shown in figure 1 is the initial status in which a station A has assigned the transmission port 12 and the reception port 13 to station B and, for its part, station B has assigned the transmission port 12 and the reception port 13 to station A. Station A notifies station B of the transmission port which it has assigned to it, by means of sending a notification message containing its sender MAC address, the MAC address of the station that it is going to be addressing and the transmission port which it has assigned to it. When station B receives that notification message the link from station A to station B becomes complete. Figure 2 shows the sending of the notification message containing the MAC addresses of the sender transmitter station and the destination receiver and the assigned transmission port. In this example of embodiment, the said transmission port will act as an identifier for the link via which the packets are going to be transmitted. Figure 3 shows the final status in which the link of station A to station B has been made, B knows the transmission and reception ports which it has locally assigned to station A, namely, 12 and 13, and it also knows the port which it has assigned in transmission locally to station A, which in this example is number 12. The link from station B to station A is created in an identical manner, but this time station B is the one which sends an identification message to station A. Represented in figures 4 and 5 is this process, the sending of the notification and the final status in which both stations have the information on the transmission port assigned at the beginning and as a consequence the two-way link is established.

In order to send data from station A to station B, station A addresses the packets using an identifier of the link being used, which in this example coincides with the transmission port of the destination receiver station, represented in figure 6. Also, when starting to transmit, it sends an unequivocal identifier, which in this example of embodiment corresponds to the MAC address of station A. With the above notification process, the receiver station knows the said identifier which has been assigned to it and it can distinguish that the information being sent is destined for it, along with the characteristics of the communication, such as the modulation used, the type of error correction, etc. In this way, and with that information, station B unequivocally determines that the data is being sent to it.

Among the stations there can exist various links, each with different contiguration parameters. In this case, the process would be similar to that stated earlier on for each of the links.

For the establishment of a two-way link, the process would be similar, though creating two one-way links, one from station A to B and the other from B to A.

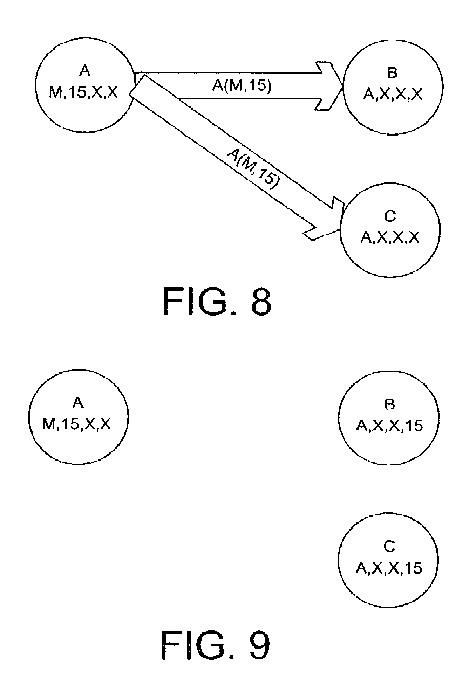

In the event of establishing a multipoint link, the transmitter station assigns a transmission port which will be the same for all the receiver stations of the multipoint group. Figure 7 shows the initial status in which station A assigns the transmission port 15 to the multipoint group characterized by the multipoint MAC address M. Equally, station B must notify the receiver stations of the transmission port which it has assigned to them, which it does by means of a notification message containing the MAC address of the transmitter station A, the MAC address of the multipoint group and the transmission port which it has assigned to them. This port will be the one used as reference identifier of the link, which is added to the packets sent via the multipoint link. Figure 8 shows this sending of notification messages.

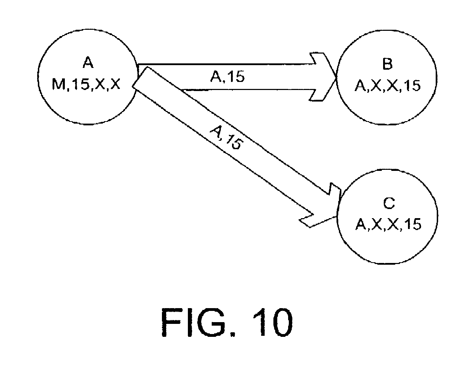

When the stations of the group have received the assigned port, the link becomes established. Figure 9 shows the final status in which the link has been established between a transmitter station A and two receiver stations B and C. The process is identical in transmission to the case of transmitting to a single station, with the difference that the data is sent with the appropriate identifier, which in this example means that the data is addressed to the multipoint port and is thereby correctly received in all the stations of the group. Figure 10 shows the transmission of data to multiple receiver stations (multicast).

Following this example of embodiment of the process, point to multipoint connections can be established between stations of the network in such a way that a station can transmit packets to other stations with different codings for each of the destination receiver stations, and a station can receive different packets from multiple transmitter stations with different codings via multiple links.

## Claims

1. **METHOD OF ESTABLISHING LINKS BETWEEN STATIONS WHICH ARE CONNECTED TO A TELECOMMUNICATION NETWORK,** which use a single transmission system and include at least one transmitter and one receiver so that a station can be a transmitter or receiver of information; it is **characterized in that** links are established between stations of the network, for which:
- each transmitter station assigns a local transmission identifier to each link to be made with the receiver stations to which it can transmit information, and it communicates that assignment to those receiver stations;
- each transmitter station establishes one or more links with each receiver station for which each transmitter assigns one or more identifiers to each receiver, with the communications using those identifiers having different coding parameters for the channel;
- each transmitter transmits during its transmission period an unequivocal identifier of the identity of its station within the network;
- the transmitter station sends information packets to which is associated the previously established identifier corresponding to the link together with the destination and the desired channel coding characteristics; and
- a receiver decodes the information sent by a link when the identifier of that information packet coincides with one of the identifiers associated with a receiver station by the transmitter station whose unequivocal identification was sent in the transmission period;
in order to establish configurable links with a minimum overload in the transmissions.

2. **METHOD OF ESTABLISHING LINKS BETWEEN STATIONS WHICH ARE CONNECTED TO A TELECOMMUNICATION NETWORK** according to claim 1, **characterized in that** in the case of carrying out transmissions to multiple destination receiver stations to which the information is addressed (by multicast or broadcast) a transmission identifier is assigned to the link between the transmitter of a station and the set of receivers of the destination receiver stations, in which a channel coding is used that is known to all destination receiver stations; so that all the destination receiver stations are capable of retrieving the transmitted information on the basis of the transmission identifier and of the unequivocal identifier of the transmitter station of the information.

3. **METHOD OF ESTABLISHING LINKS BETWEEN STATIONS WHICH ARE CONNECTED TO A TELECOMMUNICATION NETWORK** according to claims 1 or 2, **characterized in that** each link has a different channel coding which includes at least the modulation type, bits per carrier and error protection; and is defined by the unequivocal identifier of the transmitter station and the identifier of the link, which communicate with at least one destination receiver station of that link.

4. **METHOD OF ESTABLISHING LINKS BETWEEN STATIONS WHICH ARE CONNECTED TO A TELECOMMUNICATION NETWORK** according to claim 1, **characterized in that** a two-way link is carried out between two stations (A and B) by means of the creation of two links, one from station (A) to station (B) and the other from station (B) to station (A).
